# EUROPEAN PATENT APPLICATION

(11) **EP 4 653 098 A1**
(43) Date of publication of application: **26.11.2025**
(21) Application number: 25177853.6
(22) Date of filing: 21.05.2025
(51) Int. Cl.: B05C 11/10, B27D 5/00, B27G 11/02, B29B 13/02, B05C 11/11, B32B 37/12

(54) **DEVICE CONFIGURED TO MELT ELEMENTS MADE OF ADHESIVE MATERIAL**

(30) Priority: 21.05.2024 IT 202400011434
(71) Applicant: SCM Group S.p.A., 47921 Rimini (RN) (IT)
(72) Inventor: SINICO, Giacomo, 47921 Rimini (RN) (IT)
(74) Representative: Gallo, Gianluca

(57) **Abstract**

Described is a device (1) configured for melting elements (P) made of adhesive material, comprising a feed hopper (100) configured for feeding a succession of elements (P) made of adhesive material and a melting chamber (200), positioned below the hopper (100). The hopper (100) has at least one feed channel (101, 102), extending substantially along a vertical direction and suitable for containing a plurality of elements (P), mutually stacked. The device (1) comprises at least one shutter element (111, 112) positioned in the at least one feed channel (101, 102), and configured to be selectively switchable between a closed configuration wherein the at least one shutter element (111, 112) stops the feeding by falling of the succession of elements (P), and an open configuration, wherein the at least one shutter element (111, 112) allows the feeding by falling of the succession of elements (P) from the at least one feed channel (101, 102) to the melting chamber (200).

## Description

This invention relates to the manufacturing sector and relates to a device configured to melt elements made of adhesive material as well as a machine tool for machining wood comprising the device. In particular, the machine tool for machining wood is an edging machine.

The expression "elements made of adhesive material" is used to mean both elements made of adhesive material, that is to say, solid blocks of glue which are melted to create melted adhesive material, and elements made of adhesive material in a granular form.

The term "edging machine" refers to a type of machine which is used in the wood machining industry to apply edges to panels made of wood or similar materials. This type of machine may be manual, semi-automatic or completely automatic.

In the relevant sector according to this invention, various devices are known which are configured to melt elements made of adhesive material.

According to an example of prior art, a device is known comprising a feed hopper configured for feeding a succession of blocks made of adhesive material into a melting chamber, located below the feed hopper and in communication with it. The melting chamber is suitable for receiving the blocks by gravity and has a lower opening, provided with a melting grille, configured for melting the blocks and for discharging the melted adhesive material along an outlet path. The blocks have an elongate cylindrical shape. Functionally, in other words, the hopper is configured to contain a stack of superposed blocks (loaded in the hopper typically manually by an operator) which feed the melting chamber by gravity: after the block is melted, the melting chamber receives the next block. Typically, the outlet path is directly connected to a device for applying the melted glue for making the above-mentioned edging.

The Applicant has observed that, even in their most modern embodiments, the systems described above have some drawbacks of a structural and functional nature which make the use not free of drawbacks.

Firstly, in use, the high temperature of the grille, which is essential for melting the block, may lead to unwanted melting of the overlying blocks, causing the formation between them of solid blocks of glue. This phenomenon may not only adversely affect the fluidity of the process, but also make it difficult to extract and replace blocks as well as make it difficult to carry out extraordinary maintenance processes.

Moreover, since the blocks are positioned one above the other, without separating or timing mechanisms, interrupting the flow of glue may be problematic. This can lead to a waste of material and complications in adapting to sudden changes or adaptations in the production process.

A further complication may derive from the need to change the blocks of glue during production, for example to change the glue to a different colour or type. This requires the manual and complete emptying of the hopper. Lastly, the systems described above are particularly bulky. This problem is caused mainly by the structure of the hopper, which is typically configured to contain a single stack of blocks, stacked for the long term.

In this context, the technical purpose of this invention is therefore to provide a device configured for melting blocks made of adhesive material as well as a machine tool for machining wood comprising the device which are free of the drawbacks of the prior art.

The aim of this invention is therefore to provide a device configured for melting elements made of adhesive material as well as a machine tool for machining wood comprising the device which are able to guarantee controlled and efficient feeding.

A further aim of this invention is to provide a device configured for melting elements made of adhesive material as well as a machine tool for machining wood comprising the device which are able to guarantee a correct supervision and maintenance of the process performed by the device and of the device itself.

A further aim of this invention is to provide a device configured for melting elements made of adhesive material as well as a machine tool for machining wood comprising the device which are structurally optimised, in particular from the point of overall dimensions.

The technical purpose indicated and the aims specified are substantially achieved by a device configured for melting elements made of adhesive material as described and/or claimed.

According to one example, the expression "elements made of adhesive material" means blocks made of adhesive material. Still more preferably, the term "elements made of adhesive material" means blocks made of adhesive material having a cylindrical, preferably elongate, shape. Alternatively, the term "elements made of adhesive material" means elements made of adhesive material in a granular form.

In order to simplify the following description, unless otherwise specified, an example embodiment of the device is described configured to operate with elements made of adhesive material in the form of blocks made of adhesive material. However, it should be noted that the technical features described below and the advantages deriving from them are independent of the form of the molten adhesive material.

The device comprises a feed hopper configured for feeding a succession of elements made of adhesive material; said hopper having at least one feed channel, extending substantially along a vertical direction and designed to contain a plurality of elements, mutually stacked.

The device comprises a melting chamber, positioned below the hopper and defining a containment space suitable for containing at least one element made of material of the above-mentioned succession of elements made of adhesive material.

The melting chamber has a feed opening, in communication with the at least one feed channel of the hopper, so that the melting chamber can receive the succession of elements made of adhesive material by falling from the at least one feed channel.

The melting chamber also has a discharge opening provided with a melting grille configured for melting the element made of adhesive material and for discharging the melted adhesive material in an outlet path.

The melting grille has an operating temperature which is greater than or equal to a temperature of melting the above-mentioned adhesive material. The device also comprises at least one shutter element positioned in the at least one feed channel. The at least one shutter element is configured for being selectively switchable between a closed configuration wherein the at least one shutter element stops the feeding by falling of the succession of elements made of adhesive material from the at least one channel to the melting chamber, and an open configuration, wherein the at least one shutter element allows the feeding by falling of the succession of elements made of adhesive material from the at least one channel to the melting chamber.

The device also comprises at least one actuator connected to the at least one shutter element and configured to actuate the at least one shutter element between the closed configuration and the open configuration. The Applicant has found this technical feature firstly prevents the unwanted melting of the elements made of the above-mentioned adhesive material. In effect, regulating the flow of elements made of adhesive material avoids the direct contact between elements made of adhesive material positioned above in the melting chamber, thereby reducing the risk of unwanted melting and the formation of solid blocks of glue between them. This improves the fluidity of the process and simplifies the extraction and replacement of the elements made of adhesive material, reducing the risk of interruptions in the production process and simplifying the extraordinary maintenance.

This technical feature also provides a greater control on the flow of glue. By timing the feeding of the elements made of adhesive material, the flow of glue in the melting chamber is better controlled. This makes it possible to interrupt and restart to the flow of glue more precisely and quickly, reducing the waste of material and simplifying the adaptations to sudden changes or adaptations in the production process.

According to one aspect, the device may be configured to operate manually. In other words, the at least one actuator can be manually controlled by an operator to control the feeding of the elements made of adhesive material from the hopper to the melting chamber.

Alternatively, the device may be configured to operate automatically or semi-automatically. In this regard, the device may comprise a control unit, connected to the at least one actuator, and at least one sensor, connected to the control unit. As will be described in more detail below, the sensor is configured for detecting an operating parameter of the device and for sending an identification signal representative of the operating parameter detected to the control unit, which is therefore configured for controlling the at least one actuator as a function of the identification signal.

According to one aspect, the hopper may comprise a single feed channel. Alternatively, the hopper may comprise a first feed channel, suitable for containing a first plurality of elements made of adhesive material mutually stacked, and a second feed channel, positioned in parallel to the first feed channel and suitable for containing a second plurality of elements made of adhesive material mutually stacked: the first and the second channel are separated by a dividing wall and have a connecting portion connected and in communication with the feed opening of the melting chamber. According to this embodiment, the device comprises a first shutter element, positioned in the first feed channel upstream of the connecting portion, and a second shutter element, positioned in the second feed channel upstream of the connecting portion. According to this embodiment, the device comprises a first actuator connected to the first shutter element and configured for actuating the first shutter element between the closed configuration and the open configuration, and a second actuator connected to the second shutter element and configured for actuating the second shutter element between the closed configuration and the open configuration.

Advantageously, this feature makes it possible to reduce the overall dimensions of the hopper, and therefore of the device. Integrating two feed channels into a single hopper in fact reduces the space needed to install the device, especially in height, thus optimising the efficiency of the available space.

Moreover, advantageously, the device is improved in terms of production capacity with the same space used. The use of two feed channels allows the storage capacity of the hopper to be doubled, with the same dimensions in height.

Advantageously, moreover, this feature makes it possible to increase the versatility of the device and the operating flexibility. Having two separate feed channels, it is possible, for example, to feed two types of elements made of different adhesive material. The presence of two feed channels therefore makes it possible to adapt more easily to the changes in production demand. In effect, it is possible to quickly modify the type or the colour of the adhesive material used by simply adjusting the feeding of the elements made of adhesive material through the two channels, without the need to completely empty the hopper or interrupt the production process.

If present, the control unit is preferably connected to both the actuators and is configured for actuating the actuators independently so as to feed in the melting chamber the elements made of adhesive material present in the first feed channel or in the second feed channel.

For example, the control unit may be configured in such a way as to operate the retractable barriers so as to feed the first plurality of elements made of adhesive material contained in the first feed channel, and, after completing the first plurality of elements made of adhesive material, feeding the second plurality of elements made of adhesive material contained in the second feed channel or vice versa.

According to an embodiment, the at least one shutter element may be a retractable barrier configured for being switchable between an extracted configuration, corresponding to the closed configuration, and a retracted configuration, corresponding to the open configuration. Preferably, according to this embodiment, the hopper has through housing seats whilst the retractable barrier comprises retractable pins, inserted in said housing seats. The respective actuators are, on the other hand, installed on an outer wall of the hopper and connected to the above-mentioned retractable pins.

In accordance with a different embodiment, the at least one shutter element may be a valve, preferably a butterfly valve. This example embodiment is particularly advantageous when the elements of adhesive material are in the form of grains.

According to one aspect, the hopper may comprise a door for feeding the at least one feed channel, made in an upper portion of the hopper. In other words, the feed door can be selectively opened and closed manually or automatically.

The feed door may be made at least partly of transparent material. Advantageously, this feature makes it possible to observe the at least one feed channel of the hopper as well as allowing the light emitted, for example, by an illumination of the edging machine, by a lighting of a factory in which the edging machine is located and/or by solar illumination, to enter inside the hopper, in such a way as to illuminate the at least one feed channel of the hopper.

According to one aspect, the hopper may comprise at least one observation window, made on a wall of the hopper and configured to allow an operator to look inside the at least one feed channel. In this way, the operator can assess, in a simple and inexpensive manner, the state of filling of the hopper. Advantageously, if the at least one channel is illuminated, for example, by means of the observation window, as described above, it will be easier and more efficient for the operator to look inside the at least one feed channel.

If the hopper has the above-mentioned two feed channels, the hopper may have a first observation window facing the first feed channel whilst the dividing wall has at least one observation hole, aligned with the at least the first observation window and configured to allow an operator to look inside the second feed channel. In this case, too, the operator can assess, simply and inexpensively, the state of filling of the hopper, in particular in both of the above-mentioned two channels. Advantageously, if the first and/or the second channel are illuminated, for example, by means of the feed door, as described above, it will be easier and more efficient for the operator to look inside the first and/or the second feed channels.

Alternatively, if the hopper has the above-mentioned two feed channels, the hopper may have a first observation window, facing the first feed channel, and a second observation window, facing the second feed channel. In this case, too, the operator can assess, simply and inexpensively, the state of filling of the hopper, in particular in both of the above-mentioned two channels. Advantageously, if the first and/or the second channel are illuminated, for example, by means of the feed door, as described above, it will be easier and more efficient for the operator to look inside the first and/or the second feed channel.

For this reason, the presence of a first and/or a second observation window has the advantage of allowing the operator to assess, in a simple and inexpensive manner, the state of filling of the hopper. It should be noted, therefore, that this feature and the advantages deriving from it are independent of the form of the molten adhesive material. Moreover, irrespective of the form of the adhesive material to be melted, the illumination of the inside of the hopper, for example, by means of the window, has the advantage of improving and making more efficient the assessment by the operator of the state of filling of the hopper, in particular, when the first and/or the second window are present. It should be noted, therefore, that this feature and the advantages deriving from it are independent of the form of the molten adhesive material. Moreover, the presence of a first and/or a second observation window and the advantages deriving from them are also independent of the presence, or not, of the shutter element.

According to one aspect, irrespective of the structure of the hopper, the melting chamber may have a known structure, that is to say, it may be substantially shaped to match the form of the element made of adhesive material and have the discharge opening positioned in a bottom wall, the discharge opening being provided with the melting grille configured to melt the blocks and to discharge melted adhesive material from the bottom of it into the outfeed path.

Alternatively, the melting chamber may extend along a substantially horizontal main axis of extension, that is to say, have a substantially elongate shape along the main axis of extension. According to this embodiment, the feed opening is made on an upper wall of the melting chamber whilst the discharge opening is made in an end of the melting chamber.

The device comprises a piston which is movable inside the melting chamber and provided with a contact surface which is movable between a first dead centre and a second dead centre. When the contact surface is close to the first dead centre, the contact surface is behind the feed opening, allowing the falling of one or more blocks of the succession of blocks inside the melting chamber. When the contact surface is in the vicinity of the second dead centre, the contact surface abuts against the melting grille. In use, the contact surface moves one or more elements made of adhesive material in contact with the melting grille during movement from the first dead centre to the second dead centre.

If present, the control unit is connected to the piston and configured to control the movement of the piston. According to one aspect, the movement of the piston inside the melting chamber is controlled by the control unit in such a way as to be coordinated with the actuation of the at least one shutter element.

In accordance with an example, when the contact surface is close to the first dead centre, the control unit controls the actuator in such a way as to switch the respective shutter element from the closed configuration to the open configuration, in such a way as to feed an element made of adhesive material inside the melting chamber through the feed opening. If the elements made of adhesive material are in the form of grains, a predetermined quantity of elements made of adhesive material is fed inside the melting chamber.

At this point, the control unit drives the piston in such a way as to move the contact surface from the first dead centre to the second dead centre, pushing the element made of adhesive material against the melting grille in such a way as to melt the element made of adhesive material.

According to one aspect, if the control unit is present, the above-mentioned operating parameter may be a speed of movement of the contact surface of the piston, a direction of movement of the contact surface of the piston, a force applied by the contact surface of the piston and/or the position of the contact surface of the piston inside the melting chamber.

For example, if the hopper has two feed channels, the control unit may be configured in such a way as to actuate the first shutter element so as to feed the first plurality of elements made of adhesive material contained in the first feed channel, and, after completing the first plurality of elements made of adhesive material, feed the second plurality of elements made of adhesive material contained in the second feed channel or vice versa. Functionally, the sensor can measure the force applied by the contact surface of the piston during the movement from the first dead centre to the second dead centre. When the first plurality of elements made of adhesive material ends, by the detection of the sensor, the control unit detects that the piston is moved empty since there is no element made of adhesive material inside the melting chamber. At this point, the control unit may control the second actuator in such a way as to activate the second shutter element so as to feed in the melting chamber an element made of adhesive material belonging to the second plurality of elements made of adhesive material, stored in the second feed channel.

According to one aspect, the device may comprise a control and maintenance door made on a lateral or lower wall of the melting chamber: advantageously, in this way, the melting chamber can be easily reached by an operator for maintenance or control operations.

Structurally, the control and maintenance door may be hinged on the lateral wall, so as to be tilting between an open configuration and a closed configuration.

Also in the case of elements made of adhesive material in a granular form, the presence of the control and maintenance door has the advantage of simplifying the maintenance and/or control of the melting chamber by the operator. It should be noted, therefore, that this feature and the advantages deriving from it are independent of the form of the molten adhesive material. Moreover, the presence of the control door and the advantages deriving from it are also independent of the presence, or not, of the shutter element.

According to one aspect, if the device (and in particular the hopper and the melting chamber) is configured to operate with elements made of adhesive material in the form of blocks, the device may be configured to operate with a succession of blocks stacked longitudinally in the at least one feed channel or it may be configured to operate with a succession of blocks stacked transversely in the at least one feed channel. The second configuration is particularly advantageous since, if stacked transversely in the at least one feed channel, both the hopper and the melting chamber are optimised in terms of overall dimensions.

According to one aspect, irrespective of the structure of the hopper and/or of the structure of the melting chamber, the outlet path may be connected directly to a device for applying the melted adhesive material. Alternatively, the outlet path may be connected to a tank for collecting the molten adhesive material.

The technical purpose indicated and the aims specified are substantially achieved by an edging machine for machining wood, in particular for covering a panel by means of a strip, comprising a device configured to for melting elements made of adhesive material as described above.

That type of machine may be a passing machine, wherein the machining stations (for example, grinding, gluing, heading, trimming, rounding) comprising the machining units, are fixed relative to a frame of the edging machine, whilst the panels to be covered by a strip are moved, along a feed direction, by a movement system, in such a way as to pass through the machining stations. Alternatively, this type of machine can be a so-called "machining centre", having an edging head movable relative to the panel to be edged, which is positioned and held on a so-called "machining table".

More specifically, according to an embodiment of the edging machine for machining wood, it comprises a supporting surface for supporting a panel made of wood to be machined, a movement system for moving the panel along a feed direction parallel to the supporting surface, and a gluing unit, which is configured for applying a predetermined quantity of molten adhesive material on the panel, and/or on the strip, and comprises the above-mentioned device according to the invention.

Further features and advantages of the invention are more apparent in the non-limiting description which follows of a non-exclusive embodiment of a device configured for melting elements made of adhesive material according to the invention and an edging machine for machining wood comprising said device.

This description is set out below with reference to the accompanying drawings which are provided solely for illustrative and therefore non-limiting purposes, in which:
- Figure 1 shows a perspective view of a preferred, non-limiting example embodiment of a device configured for melting elements made of adhesive material, in accordance with this invention;
- Figures 2A-2B show a first operating step of the device of Figure 1;
- Figures 3A-3B show a further operating step of the device of Figure 1, following the step of Figures 2A-2B;
- Figures 4A-4B show a further operating step of the device of Figure 1, following the step of Figures 3A-3B;
- Figures 5A-5B show a further operating step of the device of Figure 1, following the step of Figures 4A-4B.
- Figures 6A-6B show a further operating step of the device of Figure 1, following the step of Figures 5A-5B.

With reference to the accompanying drawings, the numeral "1" denotes a preferred, non-limiting example embodiment of the device configured for melting elements "P" made of adhesive material. The device 1 is used in the manufacturing sector and, in particular, in the sector of machining wood. For example, the device can be used in an edging machine for machining wood (not illustrated in the accompanying drawings).

In the context of this invention, the term "edging machine" means a type of machine which is used in the wood machining industry for applying edges, or strips, to panels made of wood or similar materials. This type of machine may be manual, semi-automatic or completely automatic. Moreover, that type of machine may be a passing machine, wherein the machining stations (for example, grinding, gluing, heading, trimming, rounding) comprising the machining units, are fixed relative to a frame of the edging machine, whilst the panels to be covered by a strip are moved, along a feed direction, by a movement system, in such a way as to pass through the machining stations. Alternatively, this type of machine can be a so-called "*machining centre*", having an edging head movable relative to the panel to be edged, which is positioned and held on a so-called "*machining table*".

Further, the expression "elements made of adhesive material" means solid elements of glue which are inserted in the above-mentioned device for being melted, thus making melted adhesive material to be used in a predetermined production process.

In this description, if not specified otherwise, the term "elements made of adhesive material" means blocks made of adhesive material, that is to say, solid blocks of glue. In other words, the embodiment of the device 1 described below is configured to operate with elements made of adhesive material in the form of blocks.

Preferably, these packs have a cylindrical and elongate shape. In other words, the blocks "P" have a main axis of extension substantially coinciding with the axis of rotation of the cylinder.

However, according to embodiments, not illustrated, of the device 1, it is configured to operate with elements made of adhesive material in a granular form.

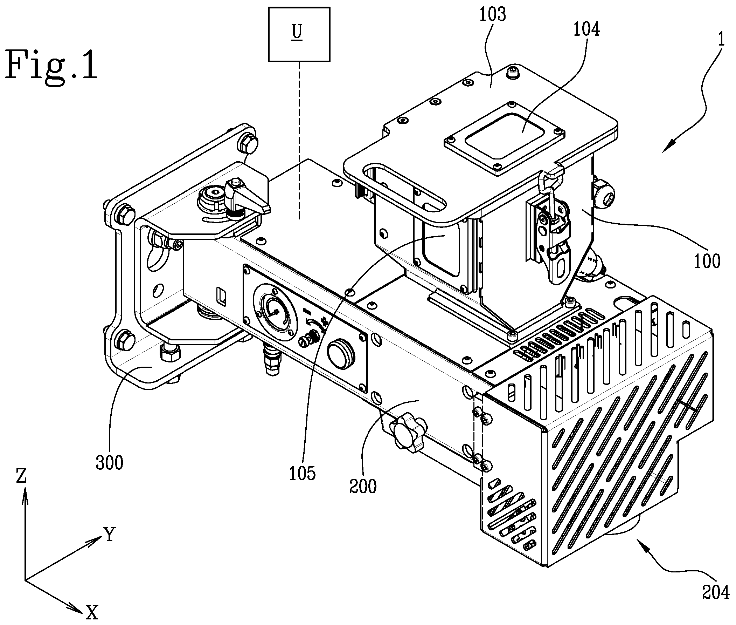

As shown in Figure 1, the device 1 comprises a feed hopper 100. The feed hopper 100 is configured for feeding a succession of blocks "P" made of adhesive material.

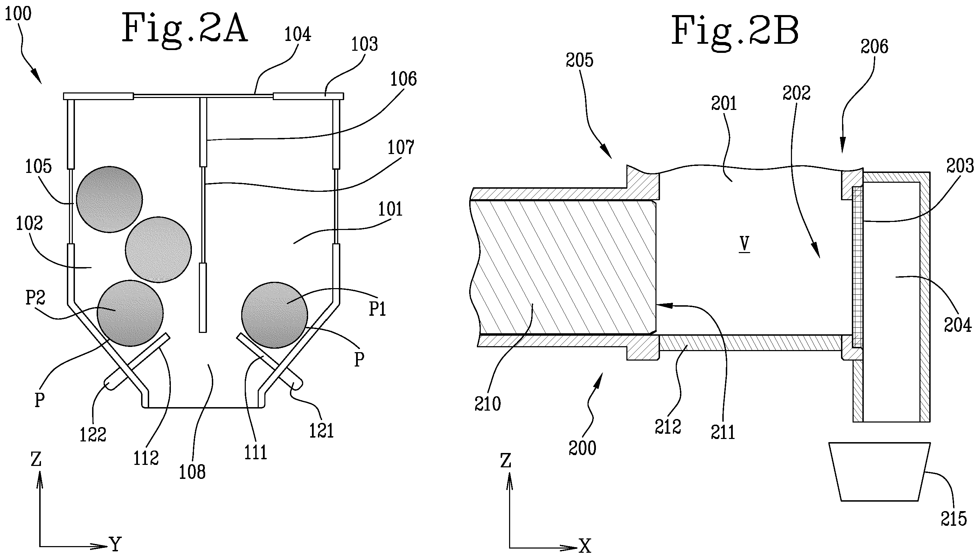

As shown in more detail in Figures 2A, 3A, 4A, 5A and 6A which illustrate a cross-section of the hopper 100 according to the ZY plane, the hopper 100 has at least one feed channel 101, 102, which extends substantially along a vertical direction and is suitable for containing a plurality of elements "P", mutually stacked. In other words, the elements "P" are positioned inside the respective at least one feed channel 101, 102 of the hopper 100 in an ordered and layered manner (one above the other) in such a way that they can be fed sequentially downstream.

According to the embodiment illustrated, the device 1 is configured to operate with a succession of elements "P" made of adhesive material stacked transversely in the at least one feed channel 101, 102. In other words, the hopper 100 is configured to operate with elements "P" made of adhesive material positioned in such a way that their main axis, or direction of extension, is transversal to the vertical direction of the feed channel 101, 102. This means that the elements "P" made of adhesive material are stacked on top of each other with the lateral surfaces in contact.

According to the embodiment illustrated, the hopper 100 comprises a first feed channel 101, suitable for containing a first plurality of elements "P1" made of adhesive material stacked on each other, and a second feed channel 102, positioned in parallel with the first feed channel 101 and suitable for containing a second plurality of elements "P2" made of adhesive material stacked on each other. The feed channels 101, 102 are divided by a dividing wall 106.

Preferably, each feed channel 101, 102 is configured to contain a number of blocks "P" of between 1 and 5, preferably between 1 and 3.

The hopper 100 comprises a door 103 for feeding the at least one feed channel 101, 102, made in an upper portion of the hopper 100. Preferably, the feed door 103 is made at least partly of transparent material. In other words, the feed door 103 has a window 104 made of transparent material. The hopper 100 comprises at least one observation window 105, made on a side wall of the hopper 100 and configured to allow an operator to look inside the at least one feed channel 101, 102.

As shown in the drawings, the hopper 100 has an observation window 105 facing the second feed channel 102 whilst the dividing wall 106 has at least one observation hole 107, aligned with the observation window 105 and configured to allow an operator to look inside the other feed channel 101, through the observation window 105.

The device 1 comprises a melting chamber 200 positioned below the hopper 100 and defining a containment space "V" suitable for containing at least one element "P" made of adhesive material of the succession of elements made of adhesive material.

As shown in more detail in Figures 2B, 3B, 4B, 5B and 6B which illustrate a cross-section of the melting chamber in accordance with the plane ZX, the melting chamber 200 has a feed opening 201, in communication with the at least one feed channel 101, 102 of the hopper 100, so that the melting chamber 200 can receive the succession of elements "P" made of adhesive material by falling from the at least one feed channel 101, 102. In particular, the first feed channel 101 and the second feed channel 102 are separated by the dividing wall 106 and have a connecting portion 108 connected and in communication with the feed opening 201 of the melting chamber 200.

The melting chamber 200 also has a discharge opening 202 provided with a melting grille 203 configured for melting the elements "P" made of adhesive material and for discharging the melted adhesive material "M" in an outlet path 204.

In particular, the melting grille 203 has an operating temperature which is greater than or equal to a melting temperature of the adhesive material.

According to the embodiment illustrated, the melting chamber 200 extends along a main axis of extension which is substantially horizontal.

Preferably, as shown, the melting chamber 200 is configured for receiving one single element "P" made of adhesive material at a time.

Still more preferably, the melting chamber 200 is shaped to match the shape of the elements "P" made of adhesive material and is configured to receive elements "P" made of adhesive material oriented with the respective main axis of extension substantially parallel to the main axis of extension of the melting chamber 200.

The feed opening 201 is made on an upper wall of the melting chamber 200 whilst the discharge opening 202 is made in an end 206 of the melting chamber 200, opposite the first end 205. Preferably, but without limiting the scope of the invention, the feed opening 201 is made on an upper wall of the melting chamber 200 close to a first end 205 whilst the discharge opening 202 is made in a second end 206 of the melting chamber 200, opposite the first end 205.

The device 1 comprises a piston 210 which is movable inside the melting chamber 200 and provided with a contact surface 211 movable between a first dead centre, where the contact surface 211 is behind the feed opening 201, allowing the falling of one or more elements 'P' made of adhesive material of the succession of elements 'P' made of adhesive material inside the melting chamber 200, and a second dead centre, where the contact surface 211 is abutted against the melting grille 203. In use, the contact surface 211 moves one or more elements "P" made of adhesive material in contact with the melting grille 203 during its movement from the first dead centre to the second dead centre, as will become clearer as this description continues.

The device 1 comprises a control and maintenance door 212 made on a lateral or lower wall of the melting chamber 200.

Preferably, the control and maintenance door 212 is hinged on the lower wall of the melting chamber 200, so as to be tilting between an open configuration and a closed configuration.

The device 1 also comprises a supporting frame 300 configured for connecting the device 1 to the machine tool for machining wood. Preferably, the supporting frame 300 is configured to make the device 1 tilting between an operating position and a disengaged position.

According to a particularly advantageous aspect, the device 1 comprises at least one shutter element 111, 112 positioned in the at least one feed channel 101, 102 and configured for being selectively switchable between a closed configuration wherein the at least one shutter element 111, 112 stops the feeding by falling of said succession of elements "P" made of adhesive material from the at least one channel to the melting chamber 101, 102, and an open configuration, wherein the at least one shutter element 111, 112 allows the feeding by falling of the succession of elements "P" made of adhesive material from the at least one feed channel 101, 102 to the melting chamber 200.

The device 1 comprises at least one actuator 121, 122 connected to the at least one shutter element 111, 112 and configured to actuate the shutter element 111, 112 between the closed configuration and the open configuration.

Preferably, the at least one actuator 121, 122 is configured for switching the respective shutter element 111, 112 from the closed configuration to the open configuration and, subsequently, from the open configuration to the closed configuration in such a way as to allow the passage of one single element "P" made of adhesive material at a time. In other words, the at least one actuator 121, 122 is configured for moving the respective shutter element 111, 112 at a speed such as to allow the passage of a single element "P" made of adhesive material per opening cycle of the retractable barrier 111, 112.

If the element made of adhesive material is in granular form, the at least one actuator 121, 122 is configured for moving the respective shutter element 111, 112 at a speed such as to allow the passage of a predetermined quantity of elements "P" made of adhesive material per opening cycle of the retractable barrier 111, 112.

According to the embodiment illustrated, the device 1 comprises a first shutter element 111, positioned in the first feed channel 101 upstream of the connecting portion 108, and a shutter element 112, positioned in the second feed channel 102 upstream of the connecting portion 108. The device comprises a first actuator 121 connected to the first shutter element 111 and configured for actuating the first shutter element 111 between the closed configuration and the open configuration, and a second actuator 122 connected to the second shutter element 112 and configured for actuating the second shutter element 112 between the closed configuration and the open configuration.

According to the embodiment illustrated in the accompanying drawings, the at least one shutter element 111, 112 is a retractable barrier configured for being switchable between an extracted configuration, corresponding to the closed configuration, and a retracted configuration, corresponding to the open configuration.

Structurally, in particular, the at least one retractable barrier comprises one or more respective retractable pins: the hopper 100 has through seats for housing the above-mentioned retractable pins whilst the respective actuators 121, 122 are, on the other hand, installed outside the hopper 100 and connected to the above-mentioned retractable pins.

According to embodiments not illustrated, the at least one shutter element may be, on the other hand, a valve, for example a butterfly valve.

According to the embodiment illustrated, the device 1 comprises a control unit "U", connected to the at least one actuator 121, 122 and to the piston 210. The device 1 also comprises at least one sensor (not illustrated), connected to the control unit "U" and configured for detecting an operating parameter of the device 1 and for sending an identification signal representative of the operating parameter to the control unit "U": the control unit "U" is configured for actuating the at least one retractable barrier 111, 112 as a function of the identification signal.

Preferably, the control unit "U" is configured for controlling the piston 210 in a coordinated fashion with the at least one shutter element 111, 112.

Preferably, the operating parameter is a speed of movement of the contact surface 211 of the piston 210, a direction of movement of the contact surface 211 of the piston 210, a force applied by the contact surface 211 of the piston 210 and/or the position of the contact surface 211 of the piston 210 inside the melting chamber 200.

Preferably, the control unit "U" is configured for actuating independently and selectively the shutter elements 111, 112, as will be described in more detail below.

According to the embodiment illustrated, the outlet path 204 communicates with a tank 215 for collecting the molten adhesive material "M", positioned in a position lower than the melting grille 203. In other words, in use, the molten adhesive material "M" flows from the melting grille 203 to the collection tank 215 by gravity through the outlet path 204. Preferably, the collection tank 215 tilts between a collection configuration, wherein the collection tank 215 communicates with the above-mentioned outlet path 204, and a maintenance configuration, wherein the collection tank 215 is positioned beneath the control and maintenance door 212, so as to collect by gravity an element made of adhesive material and/or the molten adhesive material leaving the control and maintenance door 212, when the latter is opened. Preferably, the collection tank 215 is hinged to a supporting frame 300 of the device 1.

Figures 2A-6A and 2B-6B illustrate an operating sequence of the device 1. As shown in Figures 2A-2B, inside the first feed channel 101 there is a first plurality of elements "P1" made of adhesive material whilst in the second feed channel 102 there is a second plurality of elements "P2" made of adhesive material. More specifically, the first plurality of elements 'P1' made of adhesive material comprises an element 'P' made of adhesive material whilst the second plurality of elements 'P2' made of adhesive material comprises three elements 'P' made of adhesive material.

Both the shutter elements 111, 112 are in the closed configuration and block the respective elements "P" made of adhesive material inside the respective feed channels 101, 102.

The contact surface 211 of the piston 210 is close to the first dead centre and is behind the feed opening 201.

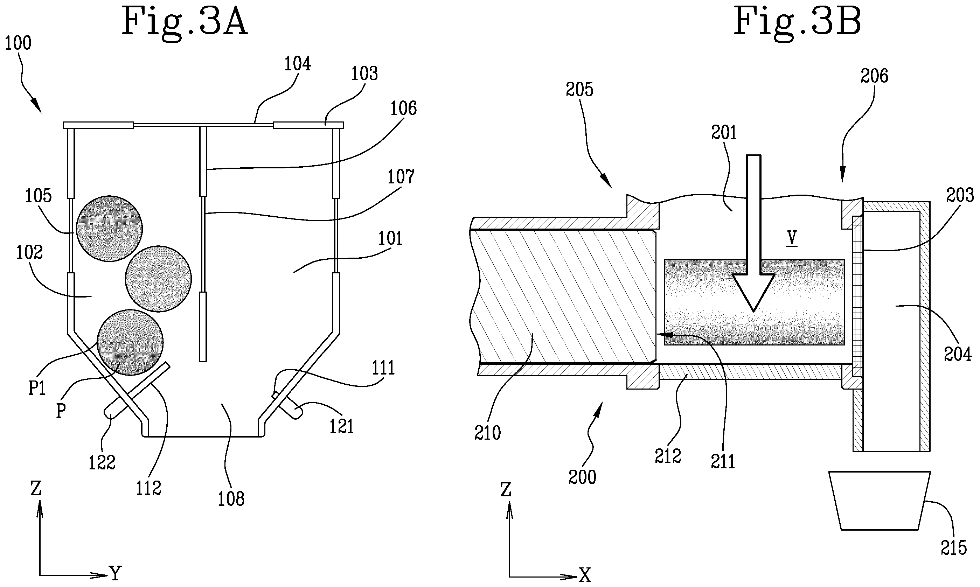

As can be seen in Figures 3A-3B, which show an operating step after that of Figures 2A-2B, the first shutter element 111 is in the open configuration and the element "P" made of adhesive material of the first plurality of elements "P1" made of adhesive material has been fed by falling inside the melting chamber 200. Subsequently, the first shutter element 111 is switched again to the closed configuration in such a way as to block the next element "P" made of adhesive material.

The contact surface 211 of the piston 210 is still close to the first dead centre, thus allowing the element "P" made of adhesive material to enter the melting chamber 200.

The second shutter element 112 is, on the other hand, in the closed configuration, blocking the elements "P" made of adhesive material of the second plurality of elements "P2" made of adhesive material inside the second feed channel 102.

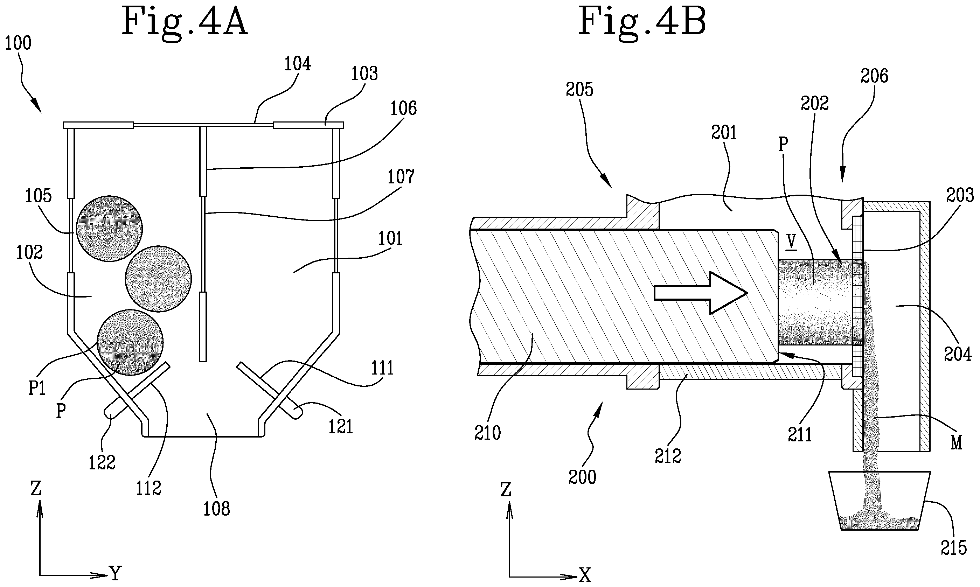

As can be seen in Figures 4A-4B, which show an operating step after that of Figures 3A-3B, the piston 210 is moved inside the melting chamber 200 in such a way that the contact surface 211 is moved from the first dead centre to the second dead centre. During this movement, the contact surface 211 engages the element "P" made of adhesive material, sending it into contact against the melting grille 203. The melting grille 203 melts the element "P" made of adhesive material to obtain the melted adhesive material "M". The molten adhesive material "M" flows through the melting grille 203, through the outlet path 204 and is then collected in the collection tank 215. After completion of the melting of the element "P" made of adhesive material, the piston 210 is moved in the opposite direction, in such a way that the contact surface 211 is moved from the second dead centre to the first dead centre.

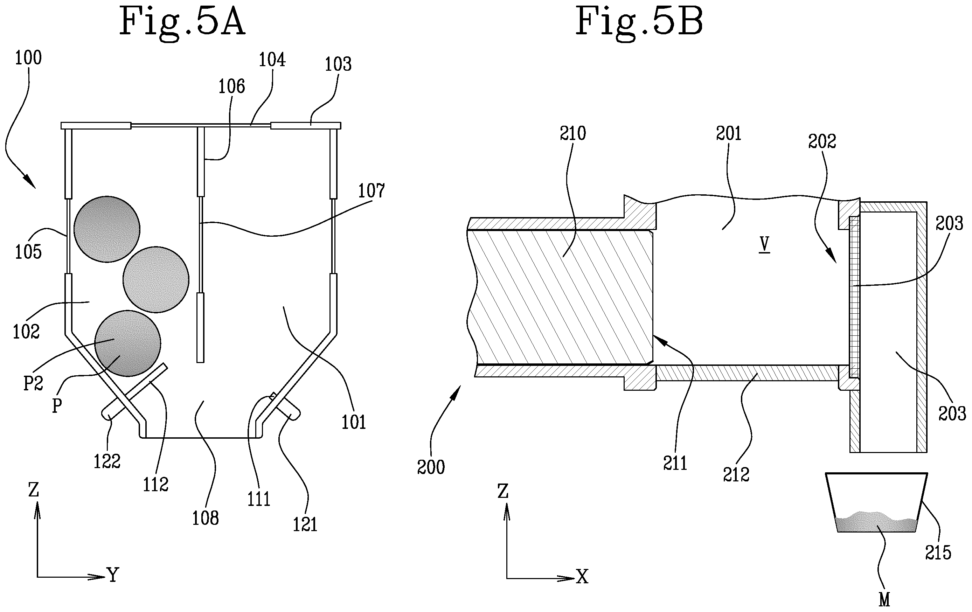

As can be seen in Figures 5A-5B, which show an operating step after that of Figures 4A-4B, the first plurality of elements "P1" made of adhesive material previously stored in the first feed channel 101 is completed. The first shutter element 111 is switched from the closed configuration to the open configuration.

The piston 210 is then again moved into the melting chamber 200 in such a way that the contact surface 211 is moved from the first dead centre to the second dead centre.

The sensor (not illustrated) detects the force applied by the contact surface 211 of the piston 210 and sends the identification signal representative of the force applied by the contact surface 211 to the control unit "U". The control unit "U" receives the identification signal and compares the signal with a preset standard value. The control unit "U" identifies a difference between the value measured by the sensor and the preset standard value. For this reason, the control unit "U" detects that there are no elements "P" made of adhesive material inside the melting chamber 200. The piston 210 is then moved in the opposite direction, in such a way that the contact surface 211 is moved from the second dead centre to the first dead centre.

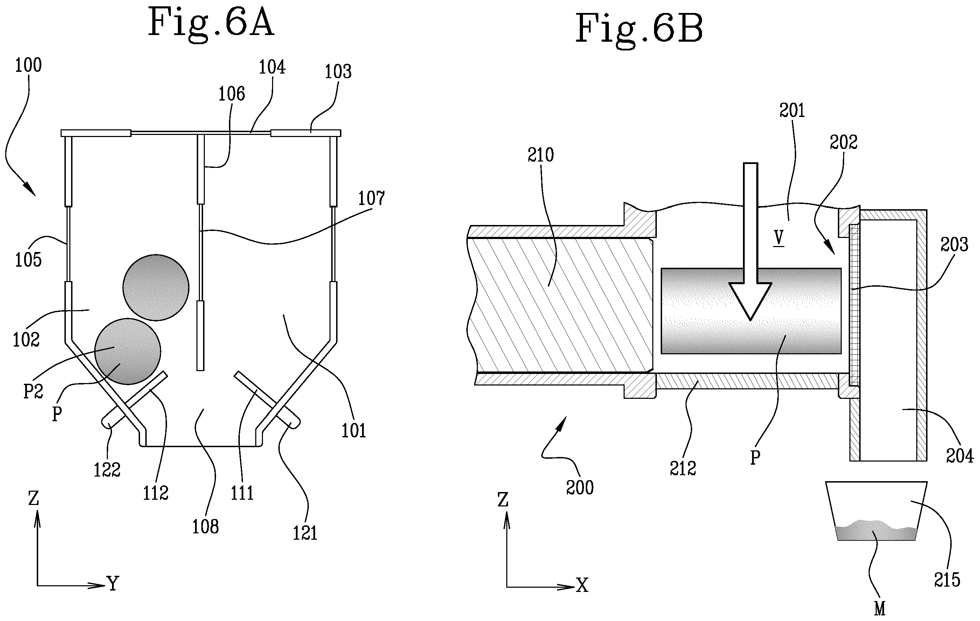

As can be seen in Figures 6A-6B, which shows an operating step after that of Figures 5A_5B, the second shutter element 112 is activated, which is switched from the closed configuration to the open configuration, allowing the falling of an element "P" made of adhesive material of the second plurality of elements "P2" made of adhesive material from the second feed channel 102 to the melting chamber 200. The second shutter element 112 is again switched from the open configuration to the closed configuration so as to again block the elements "P" made of adhesive material of the second plurality of elements "P2" made of adhesive material stored in the second feed channel 102. At this point, the process may continue until the conclusion of the elements "P" made of adhesive material of the second plurality of elements "P2" made of adhesive material inside the second feed channel 102, as described above. Obviously, during the process for finishing the elements "P" made of material of the second plurality of panels "P2", it is possible to refill the first feed channel 101 with a new first plurality of elements "P1" made of adhesive material, using the feed door 103.

The invention also relates to a machine for machining wood, not illustrated in the accompanying drawings, which comprises the device 1. In particular, the machine according to the invention is an edging machine.

In particular, according to an embodiment of the edging machine for machining wood, it comprises a supporting surface for supporting a panel made of wood to be machined, a movement system for moving the panel along a feed direction parallel to the supporting surface, and a gluing unit, which comprises the above-mentioned device 1 according to the invention. The invention achieves the above-mentioned aims, eliminating the drawbacks highlighted in the prior art.

## Claims

1. A device (1) configured to melt elements (P) made of adhesive material; said device (1) comprising:
- a feed hopper (100) configured for feeding a succession of elements (P) made of adhesive material; said hopper (100) having at least one feed channel (101, 102), extending substantially along a vertical direction and designed to contain a plurality of elements (P) made of adhesive material, mutually stacked;
- a melting chamber (200), positioned below said hopper (100) and defining a containment space (V) designed to contain at least one element (P) made of adhesive material of said succession; said melting chamber (200) having a feed opening (201), communicating with said at least one feed channel (101, 102) of the hopper (100), so that said melting chamber (200) can receive said succession of blocks (P) by falling from said at least one feed channel (101, 102); said melting chamber (200) also having a discharge opening (202) provided with a melting grille (203) configured for melting said elements (P) made of adhesive material and for unloading a melted adhesive material (M) in an outlet path (204); said melting grille (203) having an operating temperature equal to or greater than a melting temperature of said adhesive material;
**characterised in that** it comprises:
- at least one shutter element (111, 112) positioned in said at least one feed channel (101, 102), and configured to be selectively switchable between a closed configuration wherein said at least one shutter element (111, 112) stops the feeding by falling of said succession of elements (P) made of adhesive material from said at least one feed channel (101, 102) to the melting chamber (200), and an open configuration, wherein said at least one shutter element (111, 112) allows the feeding by falling of the succession of elements (P) made of adhesive material from said at least one feed channel (101, 102) to the melting chamber (200); and
- at least one actuator (121, 122) connected to said at least one shutter element (111, 112) and configured for actuating said at least one shutter element (111, 112) between said closed configuration and said open configuration.

2. The device (1) according to claim 1, wherein said device (1) is configured to operate with elements (P) made of adhesive material in the form of blocks; preferably, said device (1) is configured to operate with elements (P) made of adhesive material in the form of blocks stacked transversely in said at least one feed channel (101, 102).

3. The device (1) according to claim 1, wherein said device is configured to operate with elements (P) made of granular adhesive material.

4. The device (1) according to any one of the preceding claims, comprising a control unit (U), connected to said at least one actuator (121, 122), and at least one sensor, connected to said control unit (U) and configured for detecting an operating parameter of said device (1) and for sending an identification signal representing said operating parameter to said control unit (U); said control unit (U) being configured for actuating said at least one actuator (121, 122) as a function of said identification signal.

5. The device (1) according to any one of the preceding claims, wherein said melting chamber (200) extends along a main substantially horizontal axis of extension; said feed opening (201) being made on a side or upper wall of said melting chamber (200) whilst said discharge opening (202) is made in one end (206) of the melting chamber (200);
said device (1) comprising a piston (210) which is movable inside the melting chamber (200) and which is provided with a contact surface (211) movable between a first dead centre, where said contact surface (211) is behind said feed opening (201), allowing one or more elements (P) of adhesive material to fall into the melting chamber (200), and a second dead centre, where the contact surface (211) abuts against the melting grille (203); in use, said contact surface (211) moving one or more elements (P) of adhesive material in contact with the melting grille (203) during the movement from said first dead centre to said second dead centre.

6. The device (1) according to claim 5 when it depends on claim 4, wherein said control unit (U) is connected to said piston (210) and wherein said operating parameter is a speed of movement of the contact surface (211) of the piston (210), a direction of movement of the contact surface (211) of the piston (210), a force applied by the contact surface (211) of the piston (210) and/or the position of the contact surface (211) of the piston (210) inside the melting chamber (200).

7. The device (1) according to claim 5 or 6, wherein said control unit (U) is configured for controlling the piston (210) in a coordinated fashion with the actuation of the at least one actuator (121, 122).

8. The device (1) according to any one of the preceding claims, wherein said hopper (100) comprises a first feed channel (101), designed to contain a first plurality of elements (P1) made of adhesive material mutually stacked, and a second feed channel (102), positioned in parallel to the first feed channel (101) and designed to contain a second plurality of elements (P2) made of adhesive material mutually stacked; said first and second feed channels (101, 102) being separated by a dividing wall (106) and having a connecting portion (108) connected and in communication with the feed opening (201) of the melting chamber (200); said device (1) comprising:
- a first shutter element (111), positioned in said first feed channel (101) upstream of said connecting portion (108), and a second shutter element (112), positioned in said second feed channel (102) upstream of said connecting portion (108);
- a first actuator (121) connected to the first shutter element (111) and configured for moving the first shutter element (111) between the closed configuration and the open configuration, and a second actuator (122) connected to the second shutter element (112) and configured for moving the second shutter element (112) between the closed configuration and the open configuration;
preferably, said control unit (U) being configured to actuate independently and selectively said actuators (121, 122).

9. The device (1) according to any one of the preceding claims, wherein the hopper (100) comprises a feed door (103) of the at least one feed channel (101, 102), made in an upper portion of the hopper (100), preferably said feed door (103) being made at least partly of transparent material.

10. The device (1) according to any one of the preceding claims, wherein said at least one shutter element (111, 112) is a retractable barrier.

11. The device (1) according to any one of the preceding claims, wherein said hopper (100) comprises at least one observation window (105), made on a wall of said hopper (100) and configured to allow an operator to look inside said at least one feed channel (101, 102).

12. The device (1) according to any one of the preceding claims, comprising a control and maintenance door (212) made on a side or lower wall of said melting chamber (200).

13. The device (1) according to any one of the preceding claims, wherein the outlet path (204) is directly connectable and configured to be placed in communication with a device for applying the molten adhesive material (M).

14. The device (1) according to any one of claims 1 to 14, wherein the outlet path (104) is connectable and configured to be placed in communication with a tank (215) for collecting the molten adhesive material (M).

15. An edging machine for covering a panel using a strip, comprising:
- a supporting surface to support the panel to be covered;
- a movement system for moving the panel along a feed direction parallel to the supporting surface;
- a gluing unit configured for applying a predetermined quantity of molten adhesive material on the panel and/or on the strip, said gluing unit comprising a device (1) according to any one of claims 1 to 14.
